# DEMANDE DE BREVET EUROPEEN

(11) **EP 1 072 816 A1**
(43) Date de publication de la demande: **31.01.2001**
(21) Numéro de dépôt: 00420167.9
(22) Date de dépôt: 26.07.2000
(51) Int. Cl.: F16G 13/04

(54) **Plaquette de guidage, chaîne à plaquettes équipée d'une telle plaquette et moteur équipé d'une telle chaîne**

(30) Priorité: 30.07.1999 FR 9910096
(71) Demandeur: Sachs Automotive France SA, 38870 Saint Simeon de Bressieux (FR)
(72) Inventeur: Michel, Bernard, 69390 Millery (FR)
(74) Mandataire: Myon, Gérard Jean-Pierre

(57) **Abrégé**

Cette plaquette de guidage (20) est pourvue de deux orifices (21) de passage d'un axe d'articulation (30) qui ont une forme globalement triangulaire, les bords (B₁-B₃) de chaque orifice (21) étant identiques, et courbes, avec une concavité tournée vers l'intérieur dudit orifice.

Un évidement (E) s'étend, à partir d'un bord externe (24) de la plaquette, en direction d'un bord opposé (23), entre les orifices de passage (21, 22), ce qui permet d'alléger une chaîne pourvue d'une telle plaquette et de diminuer, en conséquence, l'usure par frottements.

## Description

L'invention a trait à une plaquette de guidage, à une chaîne comprenant une telle plaquette et à un moteur équipé d'une telle chaîne.

Une chaîne d'entraînement peut être utilisée pour la transmission d'un mouvement et, en particulier, pour la synchronisation des éléments constitutifs du système de distribution d'un moteur à combustion interne de véhicule automobile.

Les chaînes classiques sont constituées de maillons reliés par des axes. Par exemple, les chaînes dites "à dents" comprennent, pour chaque maillon, plusieurs plaquettes disposées en alternance avec les plaquettes d'un maillon voisin et devant être reliées grâce à des axes. Des plaquettes dites "de guidage" sont pourvues d'orifices de réception de ces axes, la forme de ces orifices étant adaptée à celle des axes pour permettre une transmission d'effort efficace entre les axes et les plaquettes. Les axes peuvent être sertis dans ces orifices. Dans les chaînes connues, on utilise des axes de formes complexes pour une transmission d'effort efficace, les profils de ces axes imposant des formes complexes pour les orifices dans lesquels ils doivent être introduits. Il en résulte une complexité de l'assemblage des chaînes de l'état de la technique, car chaque axe doit être orienté pour que sa forme extérieure corresponde à la forme intérieure d'un orifice d'une plaque de guidage dans lequel il doit être introduit. Cette orientation de l'axe par rapport à l'orifice de la plaque de guidage est particulièrement délicate et ne peut généralement pas être automatisée, ce qui implique que le montage de telles chaînes doit être réalisé manuellement, avec des risques d'erreur, dus à la fatigue d'un opérateur, et un coût important.

Il est connu de FR-A-2 260 727 d'utiliser des axes à section globalement triangulaire pour l'articulation des maillons d'une chaîne de transmission de puissance. Les plaquettes de guidage de cette chaîne connue doivent avoir une épaisseur suffisante pour ne pas se déformer et sont relativement lourdes, de sorte que la masse linéaire de la chaîne connue est importante, au point que les efforts de frottement générés, notamment dans les zones de contact avec des pignons, provoquent une usure prématurée de cette chaîne et/ou de ces pignons. En outre, la géométrie de ces plaquettes de guidage est telle que des pertes de matière relativement importantes ne peuvent être évitées lors de la fabrication de ces plaquettes.

C'est à ces inconvénients qu'entend plus particulièrement remédier l'invention en proposant une nouvelle plaquette de guidage qui permet une transmission d'efforts optimisés par l'utilisation d'axes à section globalement triangulaire, une limitation de l'usure de frottement et une optimisation de l'utilisation de la matière utilisée pour fabriquer une telle plaquette.

Dans cet esprit, l'invention concerne une plaquette de guidage pour chaîne d'entraînement, cette plaquette étant pourvue de deux orifices de passage d'un axe d'articulation, alors que chaque orifice a une forme globalement triangulaire, les bords de cet orifice étant identiques et courbes, avec une concavité tournée vers l'intérieur de l'orifice. Cette plaquette est pourvue d'un évidement s'étendant, à partir d'un bord externe de la plaquette, en direction d'un bord opposé de celle-ci, entre les orifices de passage des axes.

La création de cet évidement permet d'alléger sensiblement la plaquette de guidage par rapport à celles connues de l'état de la technique et d'envisager une imbrication des plaquettes de guidage lorsqu'elles sont découpées dans une plaque de tôle, ce qui diminue les pertes de matière.

Avantageusement, cet évidement s'étend au moins jusqu'au niveau d'une droite reliant les centres géométriques des orifices de passage d'axes d'articulation.

En outre, on prévoit que le bord de l'évidement est défini par une courbe dépourvue de points de rebroussement, ce qui évite, au niveau de ce bord, la création d'une zone de contrainte localisée susceptible d'être le point de départ de fissures.

Selon un aspect particulièrement avantageux de l'invention, la plaquette est formée par empilement de plaquettes élémentaires qui peuvent avoir une faible épaisseur et sont donc plus faciles à fabriquer, y compris après un traitement thermique.

L'invention concerne également une chaîne à plaquettes qui comprend au moins une plaquette telle que précédemment décrite. Grâce à la forme triangulaire des orifices de la plaquette, cette chaîne permet un entraînement sensiblement homocinétique et régulier, y compris lorsque la chaîne est partiellement enroulée sur un pignon, car un déplacement unitaire, parallèlement à la direction d'avance de la chaîne, correspond sensiblement à un déplacement unitaire angulaire du pignon considéré. En outre, la forme globalement triangulaire des orifices permet une division de l'intensité des efforts subis par une plaquette dans sa zone de contact avec un axe. La masse linéique de la chaîne conforme à l'invention est inférieure à celle des chaînes de l'état de la technique, alors que ses caractéristiques mécaniques sont au moins aussi bonnes.

L'invention concerne enfin un moteur, notamment un moteur à combustion interne, équipé d'une chaîne telle que précédemment décrite. Un tel moteur fonctionne dans des conditions optimisées de transmission des efforts de traction de la chaîne.

L'invention sera mieux comprise et d'autres avantages de celle-ci apparaîtront plus clairement à la lumière de la description qui va suivre d'un mode de réalisation d'une chaîne conforme à son principe, donnée uniquement à titre d'exemple et faite en référence aux dessins annexés dans lesquels :

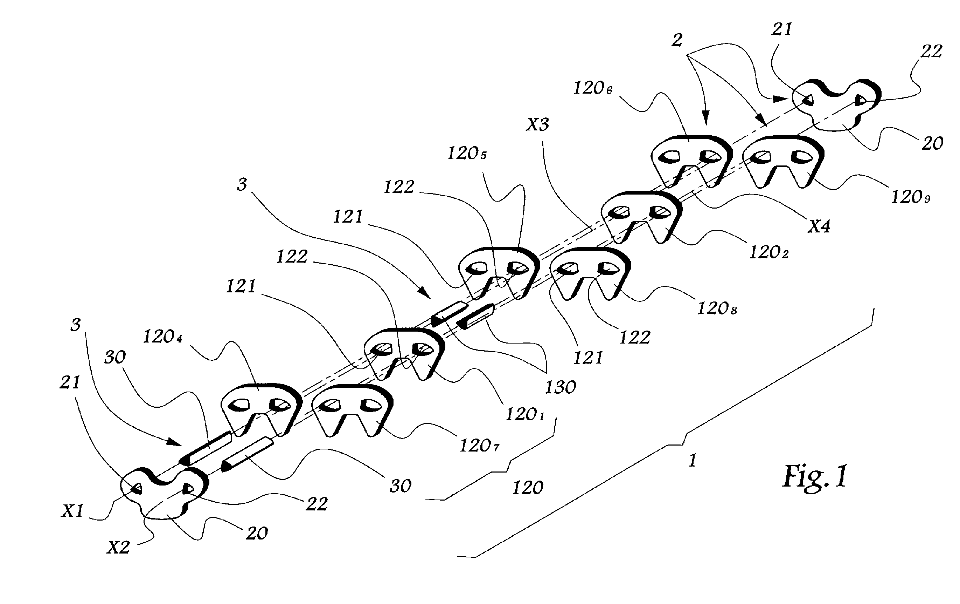

- la figure 1 est une représentation schématique, en perspective éclatée, d'un tronçon d'une chaîne conforme à l'invention ;
- la figure 2 est une vue de face d'une plaquette de guidage de la chaîne de la figure 1 ;
- la figure 3 est une vue de face d'une plaquette intermédiaire de la chaîne de la figure 1 ;
- la figure 4 est une vue partielle en perspective d'un axe de la chaîne de la figure 1 ;
- la figure 5 est une représentation schématique partielle de la chaîne de la figure 1 en cours d'utilisation ;
- la figure 6 est une coupe partielle selon la ligne VI-VI à la figure 5 et
- la figure 7 est une représentation de principe d'une étape de fabrication d'une plaquette de guidage conforme à l'invention.

La chaîne 1 représentée sur les figures est destinée à être utilisé dans un moteur à combustion interne de véhicule automobile.

Cette chaîne est formée de plaquettes 2 et d'axes 3 destinés à être assemblés ensemble. Plus précisément, les plaquettes 2 se répartissent en plaquettes de guidage ou plaquettes externes 20 et en plaquettes intermédiaires ou plaquettes internes 120. Les axes 3 peuvent être des axes longs 30, destinés à coopérer avec des plaquettes 20 et 120, ou des axes courts 130 destinés à coopérer uniquement avec des plaquettes 120.

Les plaquettes de guidage 20 sont chacune pourvues de deux orifices 21 et 22 de passage d'un axe 30. Les plaquettes 120 sont chacune pourvues de deux orifices 121 et 122 dans lesquels peuvent être reçus à la fois un axe 30 et un axe 130.

On a représenté avec les axes géométriques X₁ et X₂ la position de l'axe géométrique d'un axe 30 reçu dans les orifices 21 ou 22, en configuration montée de la chaîne.

Deux plaques 120, notées 120₁ et 120₂, sont disposées entre les plaques 20, leurs orifices 121 et 122 étant respectivement globalement alignés avec les orifices 21 et 22, de telle sorte que les axes 30 traversent ces orifices. D'autres plaques intermédiaires notées respectivement 120₄ à 120₉ sont prévues pour être partiellement disposées entre les plaquettes extérieures 20 en alternance avec les plaques 120₁ et 120₂. Dans cette configuration, les orifices 122 des plaquettes 120₄, 120₅ et 120₆ sont globalement alignées avec les orifices 121 des plaquettes 120₁ et 120₂ et avec les orifices 21 des plaquettes 20. De la même manière les orifices 121 des plaquettes 120₇, 120₈ et 120₉ sont prévus pour être globalement alignées avec les orifices 122 des plaquettes 120₁ et 120₂ et avec les orifices 22 des plaquettes 20.

Dans cette configuration, un axe court 130 peut être reçu dans les orifices 121 et 122 et l'on note X₃ l'axe géométrique d'un axe 130 reçu dans les orifices 121 des plaquettes 120₁ et 120₂ et X₄ l'axe géométrique d'un axe 130 reçu dans les orifices 122 de ces plaquettes.

En d'autres termes, en configuration montée de la chaîne, deux axes 30 traversent les plaquettes de guidage extérieure 20 et chacune de cinq plaquettes 120, selon l'axe X₁ ou l'axe X₂, alternativement au niveau d'un orifice 121 ou d'un orifice 122. Par ailleurs des axes courts 130 s'étendent, entre les plaquettes 20, selon l'axe X₃ ou l'axe X₄, en traversant également cinq orifices 121 ou 122 des plaquettes 120. Chaque orifices 121 ou 122 d'une plaquette 120 recevant deux axes, à savoir un axe long 30 et un axe court 130.

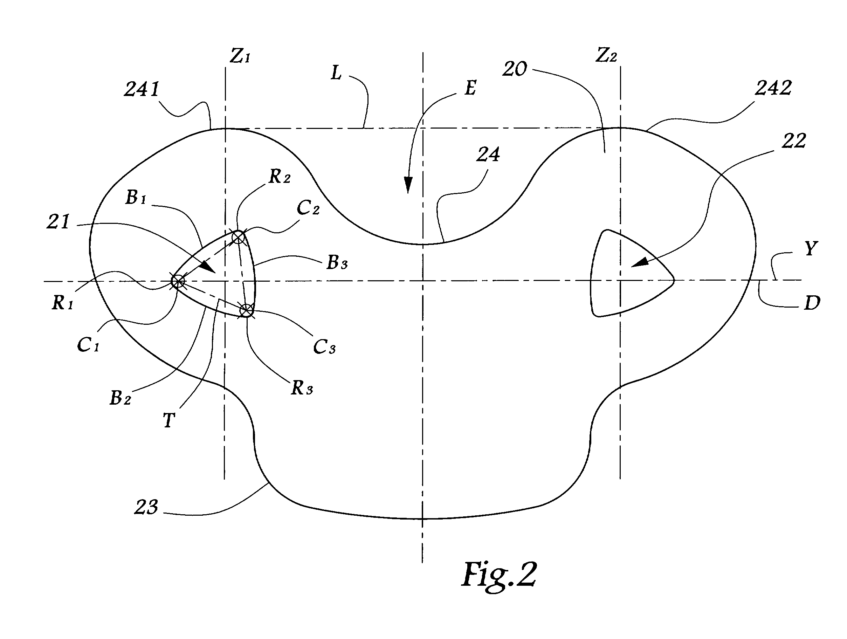

La géométrie d'une plaquette extérieure 20 ressort plus clairement de la figure 2. Cette plaquette est réalisée par empilement de deux plaquettes élémentaires 201 et 202 découpées dans des plaques de tôle d'épaisseur e égale à environ 0,6 mm. L'épaisseur des tôles dans laquelle sont découpées les plaques peut varier jusqu'à 1 mm.

Les tôles dans lesquelles sont découpées les plaquettes élémentaires 201 et 202 sont pré-traitées, par exemple trempées, afin d'améliorer leur résistance. Ce pré-traitement peut avoir lieu avant le découpage des plaquettes 201 et 202 car la faible épaisseur des tôles rend compatible ce pré-traitement et de découpage, sans risque de déformation des plaquettes.

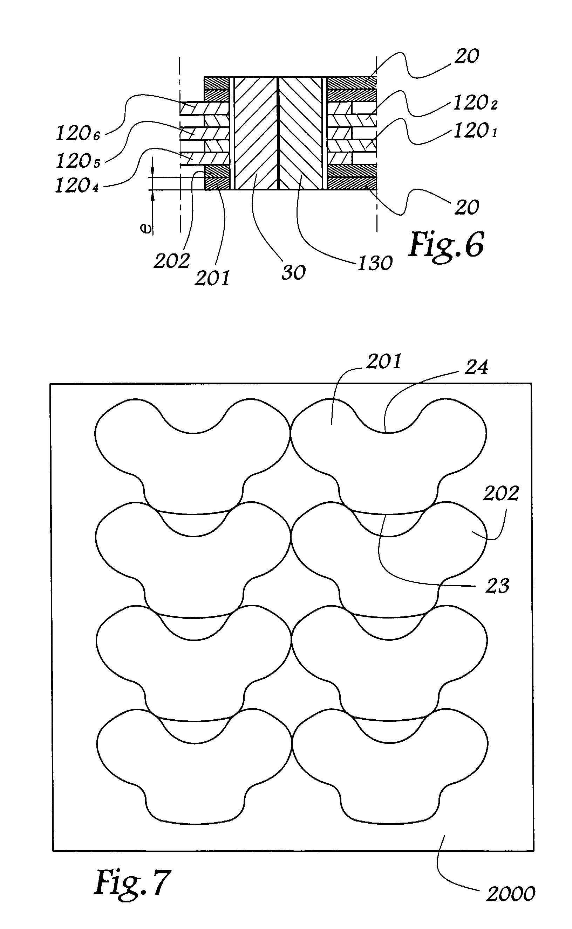

Le fait de réaliser la plaquette 20 par empilement de deux plaquettes élémentaires permet de réaliser relativement facilement les opérations de découpage de leurs bords périphériques et des bords des orifices 21 et 22. Ceci permet d'éviter également la création de fissures qui, sous l'effet des contraintes mécaniques subies par une telle plaquette, pourraient se propager dans l'épaisseur d'une telle plaquette. En effet, une fissure est forcément confinée dans le volume d'une plaquette élémentaire 201 ou 202. Les plaquettes élémentaires 201 et 202 sont réalisées par poinçonnage d'une plaque de tôle 2000, comme représenté à la figure 7.

Chaque orifice 21 ou 22 a une forme globalement triangulaire. L'orifice 21 est ainsi défini par trois bords B₁, B₂ et B₃, courbes et dont la concavité est tournée vers l'intérieur de l'orifice 21. Les bords B₁ et B₂ sont reliés par une zone de raccordement R₁ dont on note C₁ le centre de courbure. De la même manière, des zones de raccordement R₂ et R₃, dont on note C₂ et C₃ les centres de courbure, sont définies respectivement entre les bords B₁ et B₃ et entre les bords B₂ et B₃. Les bords B₁, B₂ et B₃ sont identiques en ce sens qu'ils présentent la même longueur et ont le même rayon de courbure, ce rayon de courbure étant relativement important, de telle sorte que l'orifice 21 peut être considéré comme globalement triangulaire. Les centres de courbure C₁, C₂ et C₃ forment les sommets d'un triangle imaginaire équilatéral T représenté en traits mixtes à la figure 2.

Le fait que les zones de raccordement R₁, R₂ et R₃ sont arrondies, permet d'éviter de créer des zones d'amorce de rupture entre les bords B₁, B₂ et B₃.

L'orifice 22 est analogue à l'orifice 21 mais orienté différemment. En effet, une pointe de chaque orifice 21 ou 22, c'est-à-dire une zone de raccordement, est tournée vers le bord extérieur de la plaque 20 selon une direction Y, horizontale sur la figure 2 et passant par le centre des orifices 21 et 22.

On note 23 le bord de la plaquette 20 destiné à être orienté vers les centres de courbure de la trajectoire de la chaîne 1. En d'autre termes, le bord 23 constitue le bord de la plaquette 20 orienté vers le centre des pignons avec laquelle coopère la chaîne 1. Ce bord est courbe et a une concavité orientée en direction des orifices 21 et 22. On note 24 le bord externe de la plaquette 20, c'est-à-dire son bord opposé au bord 23 et qui est orienté à l'opposé des centres de courbure de la trajectoire de la chaîne 1. Ce bord définit un évidement E en ce sens que, si l'on considère les parties 241 et 242 du bord 24 formées respectivement au niveau des orifices 21 et 22 selon les directions Z₁ et Z₂ globalement perpendiculaires à la direction Y-Y', et si l'on joint ces parties 241 et 242 par une ligne imaginaire L représentée en traits mixtes à la figure 2, le bord 24 est situé vers l'intérieur de la plaquette 20, c'est-à-dire en direction du bord 23 par rapport à la ligne L.

L'évidement E permet d'alléger sensiblement la plaquette 20 par rapport au cas où le bord 24 serait sensiblement aligné sur la ligne L.

Le fait de créer l'évidement E n'affaiblit pas sensiblement la résistance mécanique de la plaquette 20, car sa structure à base de deux plaques élémentaires évite les risques de propagation de fissures. En outre, le bord 24 a une géométrie telle qu'il ne présente pas de points de rebroussement susceptibles de constituer un point de départ de fissures.

Comme il ressort plus particulièrement de la figure 7, la géométrie de la plaquette 20 permet d'envisager un découpage des plaquettes élémentaires 201 et 202 dans la tôle 2000 avec une grande densité, car la concavité du bord interne 23 d'une plaquette 201 est orientée dans le même sens que la concavité du bord externe 24 d'une plaquette 202 adjacente et car la partie interne de la plaquette 201 peut être disposée au niveau de l'évidement E de la plaquette 202 adjacente. Ainsi, les pertes de matière dans la tôle 2000 sont minimisées.

On note que l'évidement E représente un allégement substantiel de la masse de la plaquette 20, car il s'étend, entre les orifices 21 et 22, jusqu'en deça de la droite D qui relie les centres de ces orifices selon la direction Y.

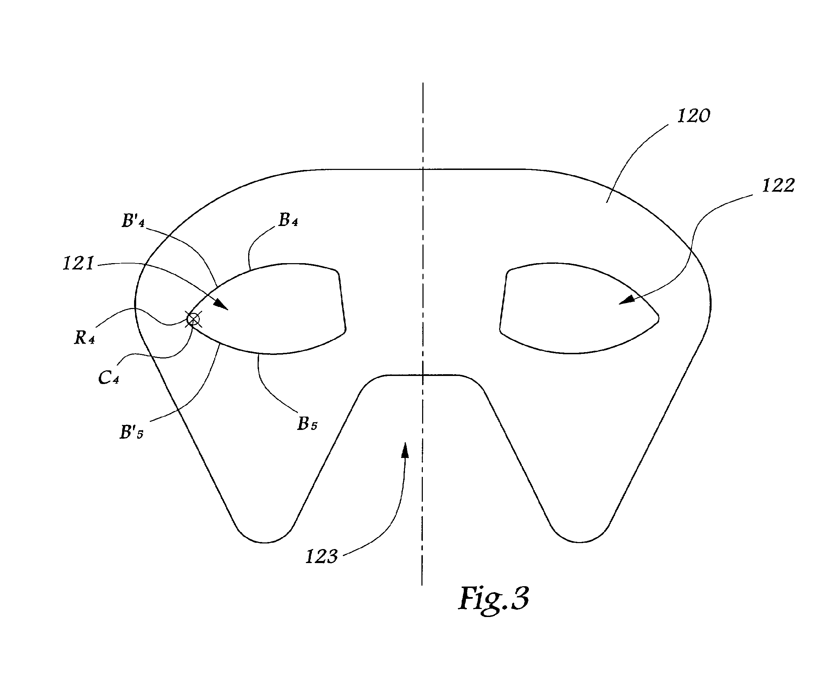

La plaquette 120 représentée à la figure 3 comprend une encoche 123 de réception d'une dent d'un pignon avec laquelle est prévue pour engrener la chaîne 1. L'orifice 121 de la plaquette 120 est bordé par deux bords B₄ et B₅ reliés, sur la gauche de la figure 3, par une zone de raccordement R₄ dont on note C₄ le centre de courbure. Dans leurs parties B'₄ et B'₅ proche de la zone R₄, les bords B₄ et B₅ ont une géométrie identique aux bords B₁ et B₂ de l'orifice 21 de la plaque 20. Ils peuvent ainsi leur être superposés.

Selon une variante non représentée de l'invention, les plaquettes 120 et équivalentes peuvent être également chacune formées de deux plaquettes élémentaires dont l'épaisseur e est de l'ordre de 0,6 mm. On obtient ainsi les mêmes avantages que pour les plaquettes de guidage 20.

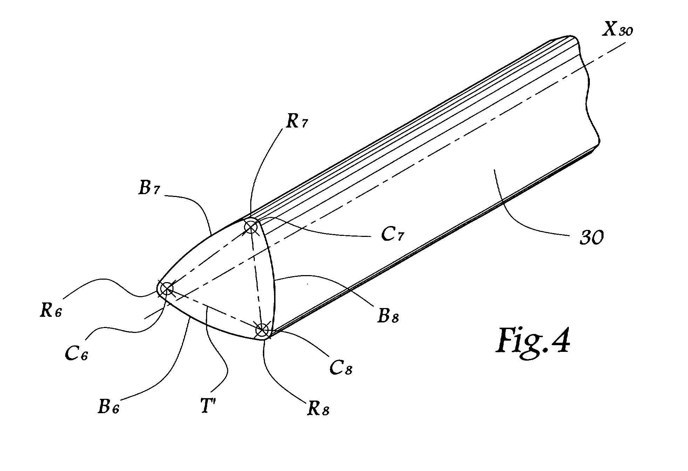

L'axe 30 représenté à la figure 4 est cylindrique et à base globalement triangulaire. Sa section est donc identique sur toute sa longueur. La section de l'axe 30 est identique à celle de l'orifice 21 en ce sens qu'il a une forme globalement triangulaire avec des bords B₆, B₇ et B₈ courbes, de mêmes dimensions que les bords B₁ à B₃, dont la concavité est tournée vers son axe géométrique central X₃₀, qui sont raccordés par des zones de raccordement notées respectivement R₆, R₇ et R₈ et dont les centres de courbure C₆, C₇ et C₈ définissent les sommets d'un triangle équilatéral imaginaire T', de mêmes dimensions que le triangle T.

Ainsi, lorsque les plaquettes sont correctement alignées, l'axe 30 peut être inséré dans leurs orifices 21 avec les bords B₆, B₇, B₈ de sa section en contact respectivement avec l'un des bords B₁, B₂, B₃. Il n'est pas nécessaire de choisir une orientation particulière de l'axe 30 par rapport à l'orifice 21, ce qui facilite le montage de la chaîne.

Un axe 130 a la même section qu'un axe 30. Il est cependant plus court puisqu'il ne traverse pas les plaquettes 20.

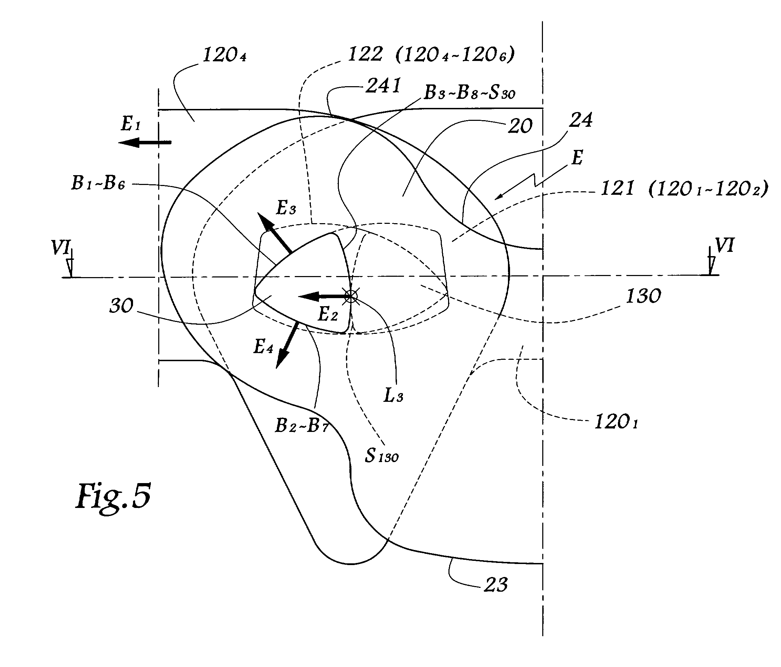

Lorsque la chaîne est montée, et comme il apparaît plus clairement à la figure 5, l'axe 30 est immobilisé par coopération de formes à l'intérieur de l'orifice 21. Sur cette figure, la référence 121 (120₁-120₂) correspond aux orifices 121 des plaquettes 120 et 120₂, alors que la référence 122 (120₄-120₆) correspond aux orifices 122 des plaquettes 120₄ à 120₆. Comme les partie B'₄ et B'₅ des bords B₄ et B₅ des orifices 121 des plaques 120₁ et 120₂ sont identiques aux bords B₁ et B₂ de l'orifice 21, l'axe 30 est également immobilisé par coopération de forme à l'intérieur des orifices 121 des plaquettes 120₁ et 120₂.

En revanche, un axe 130 disposé selon l'axe géométrique X₃ est libre de pivoter à l'intérieur des orifices 121 des plaquettes 120₁ et 120₆. Cependant, cet axe 130, qui a la même section transversale que l'axe 30, est immobilisé par coopération de formes avec les parties correspondant aux parties B'₄ et B'₅ des orifices 122 des plaquettes 120₄, 120₅ et 120₆ dans lesquels l'axe 30 est libre de pivoter.

La transmission d'un effort de traction E₁ exercée sur les plaquettes 120₄, 120₅ et 120₆ a lieu par l'appui de l'arbre 130 sur l'arbre 30, ce qui génère l'effort E₂ au niveau d'une ligne de contact L₃ entre des surfaces courbes en contact, S₃₀ et S₁₃₀, des axes 30 et 130 qui correspondent chacune à un bord B₆, B₇ ou B₈ de la section de l'axe considéré.

Du fait de la géométrie de l'axe 30 et de l'orifice 21, cet effort de traction est réparti au niveau des bords B₁ et B₂ de l'orifice 22 en deux efforts élémentaires E₃ et E₄, de moindre intensité. Ainsi, l'effort transmis à la plaquette 20 est peu susceptible de générer un déchirement de la plaquette 20 au niveau de l'orifice 21. Les dimensions de l'orifice 21 peuvent ainsi être réduites, de même que celles de l'axe 30, la taille de la chaîne pouvant être réduite en conséquence, par rapport aux chaînes de l'état de la technique, pour la transmission d'un effort de même valeur.

Une répartition d'effort analogue a lieu au niveau des bords B'₄ et B'₅ des orifices 121 et 122, selon le sens de rotation de la chaîne. Pour les mêmes raisons que précédemment, les dimensions des orifices 121 et 122, des plaquettes 120 et des axes 30 et 130 peuvent être réduites.

Cette diminution des dimensions des éléments 2 et 3 permet de diminuer l'inertie de la chaîne.

Un autre moyen de diminution de l'inertie de la chaîne est de prévoir que l'axe 30 ou 130 soit creux, ce qui peut être aisément obtenu par tréfilage. On peut prévoir que les axes 30 ou 130 sont formés par tréfilage indépendamment de leur caractère creux ou plein, ce qui est très avantageux sur le plan économique et permet de les découper à la longueur choisie, immédiatement avant leur mise en place dans les plaquettes 20 et 120, les axes étant disposés en bobine ou en torche à proximité de leur poste d'introduction dans les orifices des plaquettes et coupés à la longueur adéquate à ce niveau.

Comme il ressort plus particulièrement de la figure 2, la distance d entre le bord B₂ de l'orifice 21 et le bord extérieur 23 de la plaquette 20, est relativement importante car le sens d'inclinaison du bord B₂, par rapport à la direction Y, est le même que celui du bord 23 dans la zone considérée. En d'autres termes, la distance d est définie par la distance entre la zone R₁ et le bord 23. Il n'est donc pas crée de zone de fragilisation de la plaquette 20 entre l'orifice 21 et le bord 23.

Si l'orientation relative des plaques 20 et 120 autour des axes X₁ et X₃ à la figure 5 varie, notamment lorsque la chaîne 1 commence à engrener sur un pignon, la position de la ligne de contact L₃ sur les surfaces S₃₀ et S₁₃₀ peut varier, mais la répartition de l'effort de traction en deux composantes E₃ et _{E4}, exercées respectivement sur les bords B₁ et B₂ de l'orifice 21, demeure, cette répartition étant assez homogène pour ne pas générer de contraintes destructives sur la plaque 20.

La situation est identique pour la répartition d'efforts obtenue au niveau des bords des orifices 22, 121 et 122.

La forme des bords B₁ à B₈ est choisie pour une optimisation de la transmission des efforts entre les axes 30 et 130 et réciproquement. Il a pu être déterminé par le calcul que la formé théorique la plus adaptée est celle d'une cardioïde, une telle forme pouvant être raisonnablement approximée par un arc de cercle.

L'invention a été représentée avec des plaquettes formées par empilement de deux plaquettes élémentaires. Cependant, trois ou plus de trois plaquettes élémentaires peuvent être utilisées.

## Revendications

1. Plaquette de guidage (20) pour une chaîne d'entraînement (1), ladite plaquette étant pourvue de deux orifices (21, 22) de passage d'un axe d'articulation (30), chaque orifice (21, 22) ayant une forme globalement triangulaire, les bords (B₁, B₂, B₃) dudit orifice étant identiques et courbes, avec une concavité tournée vers l'intérieur dudit orifice, caractérisée en ce que ladite plaquette est pourvue d'un évidement (E) s'étendant, à partir d'un bord externe (24) de ladite plaquette, en direction d'un bord opposé (23) de ladite plaquette, entre lesdits orifices de passage (21, 22).

2. Plaquette selon la revendication 1, caractérisée en ce que ledit évidement (E) s'étend au moins jusqu'au niveau d'une droite (D) reliant les centres géométriques desdits orifices de passage (21, 22).

3. Plaquette selon l'une des revendications 1 ou 2, caractérisée en ce que le bord (24) dudit évidement (E) est défini par une courbe dépourvue de points de rebroussement.

4. Plaquette selon l'une des revendications 1 à 3, caractérisée en ce qu'elle est formée par empilement de plaquettes élémentaires (201, 202).

5. Plaquette selon la revendication 4, caractérisée en ce que lesdites plaquettes élémentaires (201, 202) ont une épaisseur (e) inférieure à 1 mm, de préférence de l'ordre de 0,6 mm.

6. Plaquette selon la revendication 5, caractérisée en ce que lesdites plaquettes (201, 202) sont découpées dans des tôles pré-traitées.

7. Plaquette selon l'une des revendications 1 à 6, caractérisée en ce que chaque bord (B₁, B₂, B₃, B₆, B₇, B₈) d'un orifice de passage (21, 22) a globalement une forme d'arc de cercle ou de cardioïde et en ce que lesdits bords (B₁, B₂, B₃, B₆, B₇, B₈) sont raccordés par des congés courbes (R₁, R₂, R₃, R₆, R₇, R₈) dont les centres de courbure respectifs (C₁, C₂, C₃, C₆, c₇, C₈) forment les sommets d'un triangle équilatéral (T, T').

8. Chaîne à plaquettes, caractérisée en ce qu'elle comprend au moins une plaquette (20) selon l'une des revendications précédentes.

9. Chaîne selon la revendication 8, caractérisée en ce qu'elle comprend des plaquettes intermédiaires (120) pourvues d'orifices (121, 122) de passage d'un axe d'articulation (30, 130) traversant ladite plaquette de guidage, les bords (B'₄, B'₅) des orifices desdites plaquettes intermédiaires reproduisant la géométrie de certains bords (B₁, B₂) des orifices de ladite plaquette de guidage.

10. Chaîne selon la revendication 9, caractérisée en ce que chaque orifice de passage (121, 122) desdites plaquettes intermédiaires (120) est apte à recevoir deux axes d'articulation (30, 130), l'un desdits axes étant immobilisé, par coopération de formes avec lesdites bords (B'₄, B'₅) dudit orifice reproduisant la géométrie de certains bords (B₁, B₂) des orifices (21, 22) de ladite plaquette de guidage (20), alors que l'autre axe est libre en rotation dans ledit orifice, et en ce que lesdits deux axes (30, 130) sont en appui l'un contre l'autre par deux surfaces courbes (S₃₀, S₁₃₀, B₆, B₇, B₈) dont la concavité est tournée vers l'intérieur (X₃₀) desdits axes, une ligne de contact (L₃) étant définie par lesdites deux surfaces, cette ligne de contact étant mobile en fonction de l'orientation relative desdites plaquettes (20, 120).

11. Moteur, notamment moteur à combustion interne, pour véhicule automobile, équipé d'une chaîne (1) selon l'une des revendications 8 à 10.
